# FASCICULE DE BREVET EUROPEEN

(11) **EP 0 847 702 B1**
(45) Date de publication et mention de la délivrance du brevet: **15.10.2003**
(21) Numéro de dépôt: 97402694.0
(22) Date de dépôt: 12.11.1997
(51) Int. Cl.: A23L 1/164, A23L 1/217, A23L 1/18

(54) **Procédé de fabrication d'un produit alimentaire à base de pâte laminée et/ou feuilletée**
Verfahren zur Herstellung von Lebensmitteln auf Basis von ausgewalztem und/oder laminiertem Teig
Process for making a food product based on sheeted and/or laminated dough

(30) Priorité: 15.11.1996 FR 9613952
(43) Date de publication de la demande: 17.06.1998
(73) Titulaire: LU France, 91130 Ris Orangis (FR)
(72) Inventeur: Boiteau, Patrick, 92290 Chatenay-Malabry (FR)
(74) Mandataire: Jacquard, Philippe Jean-Luc

(56) Documents cités:
- EP-A- 0 299 755
- FR-A- 2 222 027
- FR-A- 2 269 872
- FR-A- 2 327 731
- GB-A- 800 760
- GB-A- 2 290 216
- US-A- 2 954 296
- US-A- 3 384 495
- US-A- 3 600 193

## Description

La présente invention a pour objet un procédé de fabrication d'un produit alimentaire à base de pâte laminée et/ou feuilletée susceptible de présenter un aspect gonflé et mettant en oeuvre un pétrissage à froid.

On connaît du Brevet français FR-2 247 985 (TOM'S FOODS) un procédé de fabrication par extrusion d'un succédané d'amuse-gueule selon lequel :
(a) on forme une pâte en mélangeant à de l'eau un mélange sec de 20 à 80 % d'un dérivé de pommes de terre déshydraté dont les cellules ce fécule ne sont sensiblement pas brisées ; de 20 à 80 % (de préférence 35 à 65 %) d'amidon non gélatinisé; de moins de 20 % d'amidon prégélatinisé ; et de moins de 3,5 % d'un sel ionique non toxique ;
(b) on fait passer la pâte en question à travers une extrudeuse dans des conditions de pression et de température permettant de réaliser une gélatinisation partielle de l'amidon contenu dans la pâte et de produire un produit extrudé diaphane ;
(c) on coupe le produit extrudé en morceaux ou fragments de configuration ou de forme prédéterminée, immédiatement ou peu de temps après l'extrusion ;
(d) on sèche les morceaux découpés à une température allant jusqu'à 60° C, jusqu'à une teneur en humidité de 9 à 13 %, de façon à obtenir un produit semi-préparé ;
et (e) si on le souhaite, on cuit le produit semi-préparé ainsi obtenu.

Ce procédé, dans lequel une étape d'extrusion permet d'obtenir une gélatinisation partielle pour produire un produit extrudé diaphane, met en oeuvre, après découpe en morceaux ou fragments, deux étapes successives, l'une de séchage sans cuisson à une température ne dépassant pas 60° C pour obtenir un produit semi-préparé ne présentant pas d'enveloppe dure à sa surface, et l'autre de cuisson du produit semi-préparé, cette cuisson mettant en oeuvre un gonflement par une opération de friture, par application d'air chaud ou à l'aide d'un gaz, ou bien encore un gonflement au sel.

En d'autres termes, ce procédé combine deux exigences, à savoir d'une part l'étape d'extrusion, et d'autre part lesdites étapes successives de séchage et de cuisson.

Sur le plan industriel, l'étape d'extrusion est moins rentable qu'une étape de laminage (ou de feuilletage) et la double exigence d'un séchage et d'une cuisson vient également augmenter les coûts de production.

Les Brevets US-4 931 303 (HOLM) et US-4 994 295 (HOLM) décrivent des procédés qui imposent deux étapes successives, l'une de séchage et l'autre de friture. Il s'agit donc de produits frits qui sont essentiellement différents des produits cuits au four selon l'invention.

Le procédé décrit dans le Brevet US-4 560 569 (IVERS) préconise l'addition d'une suspension de lécithine pour améliorer l'étape de friture et conserver la quantité de l'huile. Ce procédé ne convient pas non plus à la fabrication de produits cuits au four.

Une autre technique, décrite dans les Brevets des Etats-Unis US-5 429 834 (ADESSO) et US-5 500 240 (ADESSO), est un procédé de fabrication d'un produit laminé (« sheeted ») mettant en oeuvre un pétrissage à froid, c'est-à-dire sans vapeur, et mettant en oeuvre un amidon cireux (« waxy ») prégélatinisé. On rappellera qu'un amidon cireux se caractérise par un taux très élevé d'amylopectine, par exemple 99 %.

Le procédé décrit dans ces Brevets met en oeuvre :
a) la formation d'un mélange pétrissable d'ingrédients comportant un amidon à teneur en gluten faible ou nulle, de 4 % à 40 % en poids d'amidon cireux prégélatinisé, ledit pourcentage étant fonction du poids dudit amidon à teneur en gluten faible ou nulle, une partie de l'amidon à teneur en gluten faible ou nulle et une partie de l'eau étant tout d'abord mélangées avec l'amidon cireux prégélatinisé de manière à obtenir une hydratation uniforme de l'amidon cireux prégélatinisé, et le reste de l'amidon à teneur en gluten faible ou nulle et le reste de l'eau étant mélangés avec l'amidon cireux prégélatinisé hydraté pour obtenir une pâte ;
b) un laminage de la pâte ;
c) un découpage de la pâte laminée en morceaux contenant entre 25 % et 60 % d'humidité ;
d) une cuisson permettant de réduire la teneur en humidité à moins de 4 % de manière à obtenir des produits présentant des poches de gonflement réparties sur sa surface;

Ce procédé impose la mise en oeuvre d'un amidon cireux prégélatinisé et d'ingrédients essentiellement dépourvus de gluten, et il ne permet pas de contrôler facilement l'aspect gonflé du produit, car il ne permet en général pas d'obtenir des produits soufflés, c'est-à-dire ayant une seule poche de gonflement, mais au contraire des produits boursouflés ou cloqués, c'est-à-dire présentant une pluralité de boursouflures ou de cloques de dimensions plus ou moins importantes et plus ou moins espacées entre elles.

Le Brevet britannique GB-800760 (BIRD) a pour objet la fabrication de céréales soufflées à partir d'une pâte comprenant de la farine de céréales et de l'eau (et donc dépourvue de matières grasses), avec addition éventuelle d'amidon prégélatinisé, les pâtons crus étant réalisés par superposition et découpe de deux bandes de pâte. Le soufflage est réalisé à des températures de l'ordre de 200°C, mais il peut être obtenu à des températures inférieures en présence d'amidon prégélatinisé. Ce procédé ne convient pas au cas des pâtes contenant des matières grasses et il implique en outre d'une part la mise en oeuvre de deux lignes superposées pour réaliser les deux bandes de pâte et d'autre part une durée de cuisson assez élevée.

Le Brevet US-3 384 495 (POTTER) concerne un procédé d'obtention de produits soufflés présentant des régions non soufflées, par effet de "docker pins". La pâte est à base de purée de pommes de terre cuite, d'amidon de pommes de terre, de farine de pommes de terre et de matières grasses avec addition de gomme de karaya qui est nécessaire à l'obtention de l'effet de gonflement désiré. Ce gonflement est obtenu en soumettant les pâtons à une convexion forcée d'air à 150°C pendant 30 minutes. Ce procédé présente le double inconvénient de nécessiter un additif (gomme de karaya) pour obtenir l'effet désiré et d'exiger un temps de cuisson très long.

Le Brevet US-2 954 296 (GENERAL FOODS) a pour objet un procédé selon lequel l'expansion du produit implique une mise sous pression de vapeur du produit puis un relâchement de cette pression dans un dispositif apparenté à un dispositif d'extrusion ("gun-puffing"), ce qui représente une difficulté de mise en oeuvre certaine par rapport à une cuisson au four.

La présente invention a pour objet un procédé de fabrication d'un produit alimentaire à base de pâte laminée et/ou feuilletée contenant des matières grasses et susceptible de présenter un aspect soufflé, mettant en oeuvre un pétrissage à froid et une cuisson au four, et qui n'implique ni de cumuler une étape de séchage et une étape de cuisson, comme dans le Brevet FR-2 247 985, ni de mettre en oeuvre des dispositifs particuliers pour obtenir l'expansion comme dans le Brevet US-2 954 296, ni d'utiliser un amidon cireux avec comme condition obligatoire la mise en oeuvre d'ingrédients essentiellement dépourvus de gluten, comme dans les Brevets des Etats-Unis US-5 429 834 et US-5 500 240 précités, ni encore d'ajouter un additif de gonflage comme dans le Brevet US-3 384 495.

Le procédé selon l'invention est caractérisé en ce qu'il comporte les étapes suivantes :
a) préparer une pâte crue pétrie sans vapeur, essentiellement dépourvue d'amidon cireux et ayant la composition suivante :
   - au moins une première fraction solide constituant entre 40 % et 60 % en poids de la pâte crue pétrie et qui est composée au moins à 80 % en poids d'au moins une matière amylacée non prégélatinisée, y compris éventuellement la fraction non prégélatinisée d'au moins un amidon non cireux partiellement prégélatinisé, la première fraction comportant éventuellement au moins un ingrédient non amylacé dans une proportion d'extrait sec inférieure ou égale à 20 % en poids de la quantité totale desdites matières constituant la première fraction,
   - une deuxième fraction solide comportant de l'amidon non cireux entièrement prégélatinisé et/ou la fraction prégélatinisée dudit (ou des) amidon(s) non cireux partiellement prégélatinisé(s) selon une proportion comprise entre 1 % et 35 % en poids de ladite quantité totale desdites matières solides constituant la première fraction solide,
   - de l'eau constituant entre 20 % et 40 % du poids de la pâte pétrie
   - au moins une matière grasse autre que celle(s) éventuellement contenue(s) dans ladite ou lesdites matière(s) non amylacée(s) et constituant entre 2 % et 7 % du poids de la pâte crue pétrie
   - et éventuellement au moins un additif tel que le sel et/ou au moins une levure chimique et/ou la lécithine de soja et/ou au moins un arôme et/ou au moins un colorant ;
b) laminer et/ou feuilleter ladite pâte pour former une bande de pâte crue pétrie à une épaisseur comprise par exemple entre 0,2 mm et 0,7mm et de préférence entre 0,35 mm et 0,55 mm ;
c) découper la bande de pâte crue pétrie pour obtenir des pâtons crus individuels ;
d) cuire les pâtons crus individuels de manière à réduire l'humidité à une valeur comprise entre 1,5 % et 3,5 % et obtenir une surface au moins partiellement soufflée ou présentant des cloques.

La cuisson s'effectue en particulier avec une chaleur suffisante pour provoquer à la fois une déshydratation de la pâte et le soufflage ou cloquage du produit. Ladite cuisson s'effectue en particulier dans un four à une température supérieure à 220°C, et de préférence comprise entre 220°C et 280°C, pendant la phase de gonflement. Le temps de cuisson peut être par exemple compris entre 1,30 et 5 minutes, ou bien entre 1,30 et 4 minutes.

Le procédé selon l'invention se distingue également des procédés mettant en oeuvre un pétrissage sous vapeur, par exemple les procédés décrits dans les Brevets US-4 834 996 (FAZZOLARE), US-4 873 093 (FAZZOLARE) ou US-3 925 577 (ABE).

Les matières amylacées peuvent être choisies parmi les matières d'origine amylacée sans gluten et/ou les matières amylacées contenant du gluten et/ou l'amidon non prégélatinisé non cireux.

Un ingrédient non amylacé peut être avantageusement constitué par du fromage et/ou au moins un légume.

L'invention sera mieux comprise à la lecture de la description qui va suivre, donnée à titre d'exemple non limitatif .

La technologie selon l'invention se base sur l'utilisation de différentes matières premières de nature amylacée avec ou sans gluten, ou de différentes origines, qui, mélangées dans des proportions déterminées avec un amidon prégélatinisé non cireux, de l'eau et différents ingrédients comme la matière grasse, la lécithine de soja, le sel, les levures chimiques, les arômes/semi-produits aromatisants et/ou les colorants, contribuent à la formation d'une pâte avec les caractéristiques, notamment rhéologiques, appropriées permettant l'obtention de produits soufflés.

Cette pâte est donc transformée en feuille par des systèmes traditionnels de formation d'une feuille de pâte laminée et/ou plus ou moins feuilletée, utilisée dans la production de biscuits, « crackers »ou « snacks » cuits au four.

Il n'y a pas de limites aux formes de produits que l'on peut obtenir : (par exemple une forme de pomme « chip », ou bien toute autre forme de fantaisie, ludique ou géométrique. Les produits peuvent être complètement soufflés ou bien présenter un aspect boursouflé ou cloqué. Cet aspect boursouflé ou cloqué peut être obtenu et contrôlé en réalisant à l'aide de pointes des trous de dégazage dans la pâte crue (effet dit de « docker pins »). Le nombre et la position des pointes ou « docker pins » dans le système de formation/coupe des produits permet de faire varier le nombre et l'espacement des cloques ou boursouflures (« blisters »). Il peut y avoir des parties vides, c'est-à-dire des trous plus ou moins réguliers à l'intérieur des produits. On peut utiliser aussi des systèmes de formation/coupe du type sans rognures (« scrapeless »). A la limite, il est aussi possible d'obtenir des produits plats, c'est-à-dire totalement dépourvus de cloques ou boursouflures en rapprochant suffisamment les pointes.

Les produits ainsi obtenus peuvent aussi avoir un contenu calorique apporté par les matières grasses additionnées inférieur à 10 %, avec des caractéristiques organoleptiques appréciables pour le consommateur. La teneur souhaitée en matières grasses peut être atteinte par l'addition d'huile en post-cuisson, c'est-à-dire d'une substance grasse qui n'a pas subi de « stress technologique » pendant l'utilisation.

L'addition de systèmes aromatisants permet de caractériser les goûts.

Les matières solides constituant la première fraction présentent avantageusement au moins un ingrédient choisi, parmi les pommes de terre déshydratées, et au moins une céréale, par exemple la farine de blé.

Les différentes matières premières que l'on peut utiliser en combinaison ou séparément sont par exemple :
- des matières d'origine amylacée sans gluten à savoir : pommes de terre déshydratées (flocons, granule, farine), et/ou mais, et/ou farine « masa », et/ou avoine, et/ou orge, et/ou riz, et/ou millet, et/ou tapioca, etc.. Le ou les amidons non cireux peuvent être quant à eux dérivés des pommes de terre et/ou des céréales susmentionnées et être partiellement ou totalement prégélatinisés ou pas du tout prégélatinisés ;
- des matières amylacées contenant du gluten, à savoir : farine de blé tendre, et/ou farine de blé dur et/ou épeautre, et/ou amarante, et/ou seigle. Le ou les amidons non cireux peuvent être également choisis parmi les amidons correspondants partiellement, totalement ou pas du tout prégélatinisés ;
- les ingrédients non amylacés éventuellement présents dans la première fraction peuvent être choisis parmi différents légumes frais ou surgelés et/ou déshydratés, et/ou leurs dérivés, fromages en poudre, etc..

Par amidon non cireux (« non waxy »), on entend un amidon contenant environ de 15 % à 30 % d'amylose et environ de 70 % à 85 % en poids d'amylopectine, par exemple un amidon de maïs à raison de 26 %/74 % de ces deux constituants respectivement, de pomme de terre à raison de 22 %/78 %, de froment à raison de 25% /75%, de tapioca à raison de 17 %/83 %, cet amidon pouvant être prégélatinisé jusqu'à 100 % par des procédés chimiques ou physiques/enzymatiques.

Le total desdites matières solides constituant la première fraction, c'est-à-dire sauf l'amidon prégélatinisé, peut varier entre 40 et 60 % de la quantité de pâte crue pétrie avant la cuisson. Pour 100 parties en poids de matières constituant la première fraction, la quantité d'amidon non cireux prégélatinisé peut varier entre 1 et 35 parties.

Supposons par exemple que la proportion de matières solides de la première fraction soit de 50 % du poids total de la pâte. La quantité totale d'amidon prégélatinisé non cireux constituant la deuxième fraction sera alors comprise entre 0,5 % et 17,5 % de la quantité totale de pâte crue pétrie, c'est-à-dire que la première plus la deuxième fraction représentent alors entre 50,5 % et 67,5 % du poids de la pâte crue pétrie.

On comprendra que l'amidon prégélatinisé non cireux peut provenir d'amidon non cireux partiellement prégélatinisé, et dans ce cas la partie non prégélatinisée de l'amidon est considérée comme faisant partie de la première fraction. La partie prégélatinisée de l'amidon est comptabilisée dans la teneur en amidon prégélatinisé non cireux, c'est-à-dire dans la deuxième fraction et/ou l'amidon entièrement gélatinisé est, quant à lui, entièrement comptabilisé dans ladite deuxième fraction.

En ce qui concerne le fromage et surtout les légumes, la quantité à prendre en compte est relative à l'extrait sec de ces produits, leur teneur en eau étant comptabilisée avec la quantité d'eau.

Lesdites matières constituant la première fraction peuvent comporter un seul ingrédient ou un mélange (en poids) par exemple de :
- pommes de terre déshydratées et/ou dérivés (85-90 %), et de légumes et/ou dérivés (10-15 %) ;
- pommes de terre déshydratées et/ou dérivés (80-90 %), et de fromage (10-20 %) ;
- céréales, par exemple farine de blé et/ou dérivés (53-63 %), de pommes de terre déshydratées et/ou dérivés (30-40 %), et de fromage (5-9 %) ;
- pommes de terre déshydratées et/ou dérivés (82-92 %), et de farine de maïs et/ou farine « masa » et/ou dérivés (8-18 %) ;
- pommes de terre déshydratées et/ou dérivés (78-88 %), de maïs/farine « masa » et/ou dérivés (8-18 %), et de fromage (2-6 %),
- farine de blé et/ou dérivés (56-66 %), de pommes de terre déshydratées et/ou dérivés (11-21 %), et de riz et/ou céréales autres que le blé et/ou dérivés (18-28 %) ;
- farine de mais et/ou dérivés (47-57 %), d'amidon (31-41 %), et de fromage (5-17 %).

La quantité des autres ingrédients de la pâte avant la cuisson peut être (en pourcentage du poids de la pâte crue pétrie) :
- eau 20 - 40 % (à savoir l'eau ajoutée sous forme liquide et la teneur en eau du fromage et/ou des légumes éventuellement présents)
- matières grasses 2 % - 7 %
- sel 0,5 - 3 %
- levure chimique 0,1 - 2 %
- lécithine de soja
- arômes, aromates et colorants selon les caractéristiques organoleptiques souhaitées.

Pour la technologie de pétrissage, on peut utiliser des mélangeurs traditionnels pour biscuiterie, tels que des pétrins horizontaux (ex. avec opérateurs à double Z), des pétrins verticaux type « Spindle Mixer », pétrins à haute vitesse type « Stephan », ou bien encore des pétrins continus.

Dans une première phase a₁, tous les ingrédients en poudre, (par exemple amidons et/ou dérivés, farines et/ou dérivés, sel, poudres à lever, arômes, aromates, colorants et amidon prégélatinisé) sont chargés dans le pétrin et mélangés à sec. Ce mélange a pour but de disperser parfaitement l'amidon prégélatinisé non cireux dans les autres matières premières. Le temps de mélange dépend du type de mélangeur. Il est compris par exemple entre 4 et 5 minutes à 30 trs/mn pour un mélangeur horizontal type double Z, entre 8 et 9 minutes à 19 trs/mn pour un pétrin du type « Spindle Mixer » et de 15 à 30 secondes entre 900 et 1 500 trs/ mn pour un pétrin à haute vitesse du type « Stephan » et pétrins continus, en fonction de la configuration de la vis et du cisaillement 5-10''.

Dans un mode préférentiel, on ajoute dans une sous-étape a₂ une partie de l'eau (40-60 % de la quantité totale d'eau), et l'on commence à mélanger à l'état humide, par exemple pendant un temps similaire à la première phase, pour obtenir un mélange humide. On ajoute ensuite la matière grasse (plastifiée, liquide ou semi-solide) additionnée éventuellement des autres ingrédients restants, par exemple la lécithine de soja et/ou des arômes/semiproduits aromatisants/colorants liquides liposolubles ou que l'on peut disperser dans les matières grasses ainsi que le reste de l'eau à une température qui peut être avantageusement comprise entre 50°C et 85°C. Les arômes/semiproduits aromatisants/colorants liquides hydrosolubles ou que l'on peut disperser dans l'eau sont de préférence dissous préalablement dans une partie de l'eau restante. L'eau restante (40-60 %) est dans ce cas ajoutée à une température de 50-70°C.

On mélange dans une troisième sous-étape a₃ l'ensemble afin d'avoir une pâte homogène dite pâte crue pétrie, qui est apte à être laminée et/ou feuilletée. Les sous-étapes a₂ et a₃ constituent la deuxième phase.

Le temps de mélange dépend du type de mélangeur. Il est de l'ordre de 4-8 minutes à 30 trs/mn et de 4-8 minutes à 60 trs/mnpour un mélangeur horizontal type double Z, de 10-15 minutes à 19 trs/mn pour un mélangeur type « Spindle Mixer », de 1 mn-30 secondes à 3 mn entre 900 et 1500 trs/mn pour un mélangeur type « Stephan ». Il est compris entre 30 secondes et 5 minutes pour le pétrin continu.

Si possible, le mélangeur est équipé d'une double enveloppe à circulation d'eau pour mieux contrôler la température de la pâte. Dans le cas d'un pétrin vertical, il est préférable d'augmenter la température de l'eau (65-85°C) pour obtenir la température correcte de la pâte (40-55°C, et de préférence 45-50°C).

D'une manière générale, la température de l'eau ajoutée lors de la deuxième phase reste donc comprise entre 50°C et 85°C.

A titre de variante, la deuxième phase peut être constituée par une seule sous-étape regroupant les sous-étapes a₂ et a₃ précitées.

Les caractéristiques rhéologiques de cette pâte crue pétrie sont évaluées selon la méthode KSC (Kramer Shear Cell) et la valeur de la force maximale ou force de pointe (« Peak Force ») est avantageusement comprise entre 3 et 12 daN et de préférence entre 6 et 9 daN à température ambiante. L'obtention de ces valeurs est liée à la quantité d'amidon prégélatinisé, des matières grasses, de lécithine de soja et à la teneur en eau de la pâte finale.

La pâte obtenue (ayant à température ambiante ladite viscoélasticité selon la méthode KSC) est remarquable en ce qu'elle n'a pas besoin de reposer et on peut l'utiliser dans les 90 minutes de la fin du pétrissage (étape a).

Il suffit de déterminer la consommation de pâte sur la ligne pour quantifier le poids du pétrin. Après pétrissage, on passe au cycle de production (étape b) qui met en oeuvre par exemple un dispositif de laminage à trois rouleaux, de 3 ou 4 couples de cylindres calibreurs et un système de formation/coupe des biscuits/crackers , par exemple du type rotodécoupoir ou moule alternatif (étape c).

Dans le cas d'une pâte laminée et s'il y a des rognures, elles sont réutilisées immédiatement au début du laminage.

Un laminage en cascade permet une réduction progressive de l'épaisseur dans un rapport de 2,5-3 à 1 ; à la sortie du calibrateur final, la feuille a une épaisseur avantageusement comprise entre 0, 2 mm et 0,7 mm et de préférence entre 0,35 et 0,55 mm.

Les produits individuels, qui peuvent être saupoudrés avec du sel et/ou d'autres ingrédients (arômes et/ou aromates) ou traités avec de la dorure en surface puis éventuellement avec un bain de soude caustique, entrent dans le four de cuisson (étape d) avec une humidité de 20 - 40 % pour un temps de par exemple 1,5 à 4 minutes pour en sortir avec une humidité comprise entre 1,5 et 3,5 % et avec une surface plus ou moins boursouflée ou cloquée ou complètement gonflée selon la disposition et/ou la présence ou l'absence des pointes (« docker pins ») sur le système de moulage ou de coupe. Une humidité plus élevée pourrait causer des phénomènes indésirables.

En l'absence de mise en oeuvre desdites pointes, les produits présentent avantageusement après cuisson une seule poche de gonflement qui occupe de préférence la totalité de la surface de produit qui se trouve ainsi soufflée à la manière d'un ballon.

Le four de cuisson peut être à flamme directe, mixte à flamme directe et cyclothermique (avec ou sans turbulences) et convection forcée directe ou indirecte, ou encore à chaleur indirecte de type cyclothermique avec ou sans turbulences et/ou convection forcée directe ou indirecte. Tous ces fours peuvent être intégrés avec d'autres systèmes de cuisson alternatifs d'origine électromagnétique, notamment radio-fréquence, diélectrique ou microondes.

Il est important que, pendant la première partie de cuisson, si possible dans le premier tiers du temps total de cuisson, il y ait une chaleur très forte pour permettre une vaporisation rapide de l'eau avant la formation de la croûte pour permettre une bonne déshydratation de la pâte et le soufflage et/ou cloquage (« blistering ») du produit.

En particulier on choisira à cet effet une température de l'air du four, autour des produits, qui soit avantageusement supérieure à 220°C et de préférence comprise entre 220°C et 280°C. Par exemple, on pourra utiliser plusieurs zones successives présentant des paliers de températures répartis sur une durée de 2,30 minutes, à savoir 250°C (I), 275°C (II), 350°C (III), 200°C (IV) et 150°C (V), les paliers I et II correspondant au gonflement des produits, les températures étant mesurées à l'aide d'un pyromètre.

Après la cuisson, les produits peuvent être aspergés d'huile par vaporisation ou frits à l'huile pour atteindre la teneur souhaitée en matières grasses et pour fixer les éventuelles aromatisations.

On donnera (ci-après) quatre exemples de composition de pâte crue pour lesquelles sont mises en oeuvre deux phases de mélange à l'état humide, ci-dessus dénommées deuxième et troisième phases. Les ingrédients correspondant aux matières constituant la première fraction telle que définie ci-dessus sont indiqués en gras.

### EXEMPLE N° 1

| **PREMIERE PHASE** | **POUR 100 KG DE PATE** | **POUR 100 KG DE MAIS** |
|---|---|---|
| **AMIDON NON PREGELATINISE** | 17.79 | 68.18 |
| **MAIS** | 26.10 | 100.00 |
| **FROMAGE** | 5.93 | 22.73 |
| SEL | 2.37 | 9.09 |
| AROMES | 0.12 | 0.45 |
| COLORANT | 0.12 | 0.45 |
| AMIDON FREGELATINISE | 8.30 | 31.82 |
| EAU | 16.61 | 63.64 |
| SOUS-TOTAL | 77.34 | 296.36 |

| **DEUXIEME PHASE** | | |
|---|---|---|
| MATIERES GRASSES | 3.56 | 13.64 |
| LECITHINE DE SOJA | 0.12 | 0.45 |
| EAU | 18.98 | 72.73 |
| TOTAL | 100.00 | 383.18 |
| EAU TOTAL | 35.59 | 136.37 |

### EXEMPLE 2

| **PREMIERE PHASE** | **POUR 100 KG DE DE PATE** | **POUR 100 KG DE POMMES DE TERRE** |
|---|---|---|
| **AMIDON NON PREGELATINISE** | 14.41 | 45.16 |
| **POMMES DE TERRE DESHYDRATEES** | 31.91 | 100.00 |
| **SEL** | 0.82 | 2.58 |
| AROMES | 0.15 | 0.48 |
| COLORANT | 0.10 | 0.32 |
| AMIDON PREGELATINISE | 8.23 | 25.81 |
| EAU | 19.56 | 61.29 |
| SOUS-TOTAL | 75.19 | 235.65 |

| **DEUXIEME PHASE** | | |
|---|---|---|
| MATIERES GRASSES | 5.15 | 16.13 |
| LECITHINE DE SOJA | 0.10 | 0.32 |
| EAU | 19.56 | 61.29 |
| TOTAL | 100.00 | 313.39 |
| EAU TOTAL | 39.11 | 122.58 |

### EXEMPLE 3

| **PREMIERE PHASE** | **POUR 100 KG DE DE PATE** | **POUR 100 KG DE POMMES DE TERRE** |
|---|---|---|
| **AMIDON NON PREGELATINISE** | 8.20 | 111.11 |
| **FARINE DE BLE** | 28.70 | 388.89 |
| **FARINE DE RIZ** | 5.74 | 77.78 |
| **POMMES DE TERRE DESHYDRATEES** | 7.38 | 100.00 |
| **FROMAGE** | 4.10 | 55.56 |
| SEL | 0.82 | 11.11 |
| AROMES | 0.41 | 5.56 |
| COLORANT | 0.08 | 1.11 |
| POUDRE LEVANTE | 0.98 | 13.33 |
| AMIDON PREGELATINISE | 4.92 | 66.67 |
| EAU | 17.22 | 233.33 |
| SOUS-TOTAL | 78.56 | 1064.44 |

| **DEUXIEME PHASE** | | |
|---|---|---|
| MATIERES GRASSES | 4.10 | 55.56 |
| LECITHINE DE SOJA | 0.12 | 1.67 |
| EAU | 17.22 | 233.33 |
| TOTAL | 100.00 | 1355.00 |
| EAU TOTAL | 34.44 | 466.67 |

### EXEMPLE 4

| **PREMIERE PHASE** | **POUR 100 KG DE DE PATE** | **POUR 100 KG DE POMMES DE TERRE** |
|---|---|---|
| **AMIDON NON PREGELATINISE** | 29.44 | 223.08 |
| **LEGUMES*** | 32.60 (ES = 3.26) | 247.01 |
| **POMMES DE TERRE DESHYDRATEES** | 13.20 | 100.00 |
| SEL | 1.42 | 10.77 |
| AROME | 2.54 | 19.23 |
| COLORANT | 0.51 | 3.85 |
| EAU | 2.02 | 17.31 |
| AMIDON PREGELATINISE | 7.11 | 53.85 |
| SOUS-TOTAL | 88.83 | 673.08 |

| **DEUXIEME PHASE** | | |
|---|---|---|
| MATIERES GRASSES | 4.06 | 30.77 |
| LECITHINE DE SOJA | 0.10 | 0.77 |
| EAU | 7.00 | 53.04 |
| TOTAL | 100.00 | 757.66 |
| EAU TOTAL | 9.02 + 29.34 | 68.32 |

| | | |
|---|---|---|
| * Les légumes utilisés contiennent 90 % d'humidité, soit 29,34 kg d'eau et 3,26 kg d'extrait sec ES. | | |

Les conditions du test KSC seront brièvement rappelées ci-après :

Le test KSC a été mise au point dès 1951 par KRAMER et collaborateurs, et mis en oeuvre dans une machine universelle de test de type INSTRON.

On repère tout d'abord par marquage au crayon feutre sur les échantillons de pâte crue à tester la direction de laminage ou de feuilletage. Après laminage ou feuilletage, on laisse reposer la pâte durant 3 mn avant de mesurer son épaisseur et d'effectuer le test KSC. On découpe un certain nombre d'échantillons à l'aide d'un outil de découpe (« cutter ») de 29 mm de diamètre. Le test KSC est réalisé à l'aide d'une cellule de charge de 50 kg disposée sur la machine INSTRON.

Chaque échantillon est placé au centre de la cellule KSC avec la ligne de marquage au feutre orientée selon la diagonale du dispositif de maintien. Cette procédure, selon laquelle les lames sont disposées selon la diagonale de la direction de laminage ou de feuilletage est celle qui donne les résultats les plus reproductibles.

La courbe, obtenue par la machine INSTRON, donne la force (en ordonnées) en fonction de la distance (en abscisses). Elle est obtenue en poussant à l'aide des lames, le morceau de pâte à tester à travers les fentes inférieures de la cellule.

La courbe obtenue présente une forme typique à deux sommets. Le premier sommet (« peak ») correspond à une force d'amplitude nettement supérieure à celle du second sommet ou épaule (« shoulder »).

## Revendications

1. Procédé de fabrication d'un produit alimentaire à base de pâte laminée et/ou feuilletée, **caractérisé en ce qu'**il comporte les étapes suivantes :
a) préparer une pâte crue pétrie sans vapeur, essentiellement dépourvue d'amidon cireux, et ayant la composition suivante :
- au moins une première fraction constituant entre 40 % et 60 % en poids de la pâte crue pétrie et qui est composée au moins à 80 % en poids d'au moins une matière amylacée non prégélatinisée y compris éventuellement la fraction non prégélatinisée d'au moins un amidon non cireux partiellement prégélatinisé, la première fraction comportant éventuellement au moins un ingrédient non amylacé dans une proportion d'extrait sec inférieure ou égale à 20 % en poids de la quantité totale des matières constituant la première fraction,
- une deuxième fraction comprenant de l'amidon prégélatinisé non cireux et/ou la fraction prégélatinisée dudit (ou des) amidon(s) non cireux partiellement prégélatinisé(s) dans une quantité comprise entre 1 % et 35 % en poids de ladite quantité totale des matières de la première fraction,
- de l'eau constituant entre 20 % et 40 % en poids de la pâte crue pétrie
- entre 2 % et 7 % de matières grasses autres que celles éventuellement contenues dans ladite ou lesdites matières non amylacées, et constituant entre 2 % et 7 % du poids de la pâte crue pétrie
- et éventuellement au moins un additif tel que le sel et/ou au moins une levure chimique et/ou la lécithine de soja et/ou au moins un arôme et/ou au moins un colorant ;
b) laminer et/ou feuilleter ladite pâte crue pétrie pour former une bande de pâte crue ;
c) découper la bande de pâte crue laminée et/ou feuilletée pour obtenir des pâtons crus individuels
d) cuire au four les pâtons crus individuels avec une chaleur suffisante pour provoquer à la fois une déshydratation de la pâte et le soufflage ou cloquage du produit de manière à réduire l'humidité à une valeur comprise entre 1,5 % et 3,5 % et obtenir une surface au moins partiellement soufflée ou présentant des cloques.

2. Procédé selon la revendication 1, **caractérisé en ce que** lors de l'étape d, la température du four est au moins égale à 220°C, et de préférence comprise entre 220°C et 280°C, lors du soufflage ou cloquage desdits pâtons individuels.

3. Procédé selon une des revendications 1 ou 2, **caractérisé en ce que** le temps de cuisson est compris entre 1,5 et 5 minutes.

4. Procédé selon une des revendications 1 à 3, **caractérisée en ce qu'**un dit ingrédient non amylacé est choisi parmi les fromages et/ou les légumes.

5. Procédé selon une des revendications 1 à 4, **caractérisée en ce que** lesdites matières constituant la première fraction sont choisies parmi les pommes de terre déshydratées et au moins une céréale, par exemple la farine de blé.

6. Procédé selon une des revendications 1 à 4, **caractérisé en ce que** lesdites matières constituant la première fraction comportent de 85 % à 90 % de pommes de terre déshydratées et de 10 % à 15 % de légumes.

7. Procédé selon une des revendications 1 à 4, **caractérisé en ce que** lesdites matières constituant la première fraction comprennent de 80 % à 90 % de pommes de terre déshydratées et de 10 % à 20 % de fromage.

8. Procédé selon une des revendications 1 à 4, **caractérisé en ce que** lesdites matières constituant la première fraction comprennent de 53 % à 63 % de céréales, de 30 % à 40 % de pommes de terre déshydratées et de 5 % à 9 % de fromage.

9. Procédé selon une des revendications 1 à 4, **caractérisé en ce que** lesdites matières constituant la première fraction comprennent de 82 % à 92 % de pommes de terre déshydratées et de 8 % à 18 % de farine de maïs et/ou de farine « masa ».

10. Procédé selon une des revendication 1 à 4, **caractérisé en ce que** lesdites matières constituant la première fraction comprennent de 78 % à 88 % de pommes de terre déshydratées, de 8 % à 18 % de farine de mais et/ou de farine « masa » et de 2 % à 6 % de fromage.

11. Procédé selon une des revendications 1 à 4, **caractérisé en ce que** lesdites matières constituant la première fraction comprennent de 56 % à 66 % de farine de blé, de 11 % à 21 % de pommes de terre déshydratées et de 18 % à 28 % de riz et/ou céréales autres que le blé.

12. Procédé selon une des revendications 1 à 4, **caractérisé en ce que** lesdites matières constituant la première fraction comprennent de 47 % à 57 % de farine de maïs, de 31 % à 41 % d'amidon et de 5 % à 17 % de fromage.

13. Procédé selon une des revendications précédentes, **caractérisé en ce que** l'étape a) comporte une sous-étape a₁ de mélange à sec des ingrédients en poudre de manière à obtenir un mélange sec dans lequel ledit amidon prégélatinisé non cireux est dispersé dans les autres ingrédients.

14. Procédé selon la revendication 13, **caractérisé en ce que** l'étape a) comporte une sous-étape a₂ d'incorporation de 40 % à 60 % de la quantité totale d'eau dans ledit mélange sec pour obtenir un mélange humide.

15. Procédé selon la revendication 14, **caractérisé en ce que** l'étape a) comporte une sous-étape a₃ d'incorporation audit mélange humide de la matière grasse et éventuellement des autres ingrédients restants ainsi que d'incorporation du reste de l'eau à une température comprise entre 50°C et 85°C de manière à obtenir ladite pâte crue pétrie qui est apte à être laminée et/ou feuilletée.

16. Procédé selon une des revendications précédentes, **caractérisé en ce que** ladite pâte crue pétrie présente une force de pointe comprise entre 3 daN et 12 daN et de préférence entre 6daN et 9daN au test de rhéologie selon la méthode KSC.

17. Procédé selon une des revendications précédentes, **caractérisé en ce que** l'étape b intervient dans les 90 minutes qui suivent la fin de l'étape a ;

18. Procédé selon une des revendications précédentes, **caractérisé en ce qu'**il comporte une étape de réalisation dans la pâte crue de trous dits de dégazage, de manière à obtenir après cuisson un produit présentant une pluralité de cloques ou boursouflures.

19. Procédé suivant une des revendications précédentes, **caractérisé en ce que**, après l'étape b, la pâte crue pétrie présente une épaisseur comprise entre 0,2 mm et 0,7 mm et de préférence entre 0,35 mm et 0,55 mm.

## Patentansprüche

1. Verfahren zur Herstellung eines Nahrungsmittelprodukts auf Basis von ausgewalztem Teig und/oder Blätterteig, **dadurch gekennzeichnet, daß** es die folgenden Schritte umfaßt:
a) Herstellen, ohne Dampf, eines rohen Knetteigs, der im wesentlichen frei von wachsiger Stärke ist und die folgende Zusammensetzung hat:
- wenigstens ein erster Teil, der 40 bis 60 Gew.-% des rohen Knetteigs ausmacht und der zusammengesetzt ist aus wenigstens 80 Gew.-% wenigstens eines stärkehaltigen, nicht vorgelatinierten Stoffs, worin gegebenenfalls der nicht vorgelatinierte Teil wenigstens einer nicht wachsigen, partiell vorgelatinierten Stärke enthalten ist, wobei der erste Teil gegebenenfalls einen nicht stärkehaltigen Bestandteil in einer Trockenextraktmenge von unter oder gleich 20 Gew.-% der Gesamtmenge der Stoffe beinhaltet, aus denen der erste Teil besteht,
- ein zweiter Teil, der vorgelatinierte, nicht wachsige Stärke und/oder den vorgelatinierten Teil der besagten nicht wachsigen, partiell vorgelatinierten Stärke(n) in einer Menge umfaßt, die zwischen 1 und 35 Gew.-% besagter Gesamtmenge von Stoffen des ersten Teils liegt,
- Wasser in einer Menge zwischen 20 und 40 Gew.-% des rohen Knetteigs,
- zwischen 2% und 7% andere Fette als die, die gegebenenfalls in dem oder den nicht stärkehaltigen Stoff(en) enthalten sind, und welche zwischen 2 und 7 Gew.-% des rohen Knetteigs ausmachen,
- und gegebenenfalls wenigstens einen Zusatzstoff wie Salz und/oder wenigstens ein Backpulver und/oder Sojalecithin und/oder wenigstens einen Aromastoff und/oder wenigstens einen Farbstoff;
b) Auswalzen und/oder zu Blätterteig formen des rohen Knetteigs unter Bildung eines Streifens aus rohem Teig;
c) Zerschneiden des Streifens aus rohem ausgewalzten und/oder zu Blätterteig geformten Teigs zur Herstellung einzelner roher Teigstücke;
d) Backen der einzelnen rohen Teigstücke im Ofen bei einer Hitze, die ausreicht, um gleichzeitig eine Entwässerung des Teigs und ein Aufblähen oder eine Blasenbildung des Produkts zu bewirken, so daß die Feuchtigkeit auf einen Wert zwischen 1,5% und 3,5% reduziert und eine Oberfläche erhalten wird, die wenigstens teilweise aufgebläht ist oder Blasen zeigt.

2. Verfahren nach Anspruch 1, **dadurch gekennzeichnet, daß** bei Schritt d die Temperatur des Ofens beim Aufblähen oder bei der Blasenbildung besagter einzelner Teigstücke wenigstens gleich 220°C ist und vorzugsweise zwischen 220°C und 280°C liegt.

3. Verfahren nach einem der Ansprüche 1 oder 2, **dadurch gekennzeichnet, daß** die Backzeit zwischen 1,5 und 5 Minuten liegt.

4. Verfahren nach einem der Ansprüche 1 bis 3, **dadurch gekennzeichnet, daß** einer der nicht stärkehaltigen Bestandteile ausgewählt ist aus Käse und/oder Gemüse.

5. Verfahren nach einem der Ansprüche 1 bis 4, **dadurch gekennzeichnet, daß** die Stoffe, die den ersten Teil ausmachen, ausgewählt sind aus entwässerten Kartoffeln und wenigstens einer Getreidesorte, beispielsweise Weizenmehl.

6. Verfahren nach einem der Ansprüchen 1 bis 4, **dadurch gekennzeichnet, daß** die Stoffe, die den ersten Teil ausmachen, 85% bis 90% entwässerte Kartoffeln und 10% bis 15% Gemüse enthalten.

7. Verfahren nach einem der Ansprüche 1 bis 4, **dadurch gekennzeichnet, daß** die Soffe, die den ersten Teil ausmachen, 80% bis 90% entwässerte Kartoffeln und 10% bis 20% Käse umfassen.

8. Verfahren nach einem der Ansprüche 1 bis 4, **dadurch gekennzeichnet, daß** die Stoffe, die den ersten Teil ausmachen, 53% bis 63% Getreide, 30% bis 40% entwässerte Kartoffeln und 5% bis 9% Käse umfassen.

9. Verfahren nach einem der Ansprüche 1 bis 4, **dadurch gekennzeichnet, daß** die Stoffe, die den ersten Teil ausmachen, 82% bis 92% entwässerte Kartoffeln und 8% bis 18% Maismehl und/oder "Masa"-Mehl umfassen.

10. Verfahren nach einem der Ansprüche 1 bis 4, **dadurch gekennzeichnet, daß** die Stoffe, die den ersten Teil ausmachen, 78% bis 88% entwässerte Kartoffeln, 8% bis 18% Maismehl und/oder "Masa"-Mehl und 2% bis 6% Käse umfassen.

11. Verfahren nach einem der Ansprüche 1 bis 4, **dadurch gekennzeichnet, daß** die Stoffe, die den ersten Teil ausmachen, 56% bis 66% Weizenmehl, 11% bis 21% entwässerte Kartoffeln und 18% bis 28% Reis und/oder anderes Getreide als Weizen umfassen.

12. Verfahren nach einem der Ansprüche 1 bis 4, **dadurch gekennzeichnet, daß** die Stoffe, die den ersten Teil ausmachen, 47% bis 57% Maismehl, 31% bis 41% Stärke und 5% bis 17% Käse umfasen.

13. Verfahren nach einem der vorhergehenden Ansprüche, **dadurch gekennzeichnet, daß** 'Schritt a) einen Unterschritt a₁ des Trockenmischens der pulverförmigen Bestandteile beinhaltet, so daß eine Trockenmischung erhalten wird, in der die vorgelatinierte, nicht wachsige Stärke in den anderen Bestandteilen dispergiert ist.

14. Verfahren nach Anspruch 13, **dadurch gekennzeichnet, daß** Schritt a) einen Unterschritt a₂ des Einbringens von 40% bis 60% der Gesamtmenge Wasser in die Trockenmischung beinhaltet, um eine Feuchtmischung herzustellen.

15. Verfahren nach Anspruch 14, **dadurch gekennzeichnet, daß** Schritt a) einen Unterschritt a₃ des Einbringens, des Fetts und gegebenenfalls der anderen restlichen Bestandteile sowie des Einbringens des restlichen Wassers bei einer Temperatur zwischen 50°C und 85°C in die Feuchtmischung beinhaltet, so daß der rohe Knetteig erhalten wird, der ausgewalzt und/oder zu Blätterteig geformt werden kann.

16. Verfahren nach einem der vorhergehenden Ansprüche, **dadurch gekennzeichnet, daß** der rohe Knetteig im Rheologietest nach der KSC-Methode eine Maximalkraft zwischen 3 daN und 12 daN und vorzugsweise zwischen 6 daN und 9 daN aufweist.

17. Verfahren nach einem der vorhergehenden Ansprüche, **dadurch gekennzeichnet, daß** Schritt b) innerhalb von 90 Minuten nach Beendigung von Schritt a) stattfindet.

18. Verfahren nach einem der vorhergehenden Ansprüche, **dadurch gekennzeichnet, daß** es einen Schritt beinhaltet, bei dem in dem rohen Teig sogenannte Entgasungslöcher erzeugt werden, so daß nach dem Backen ein Produkt erhalten wird, das zahlreiche Blasen oder Wellungen aufweist.

19. Verfahren nach einem der vorhergehenden Ansprüche, **dadurch gekennzeichnet, daß** der rohe Knetteig nach Schritt b) eine Dicke zwischen 0,2 mm und 0,7 mm und vorzugsweise zwischen 0,35 mm und 0,55 mm aufweist.

## Claims

1. Method of manufacturing a food product with a base of flaky or puff pastry, **characterised in that** it comprises the following steps:
a) preparing a kneaded raw dough without steam, essentially free of waxy starch and having the following composition:
- at least a first fraction constituting between 40% and 60 % by weight of the kneaded raw dough and made up of at least 80 % by weight of at least one non-pre-gelatinized starchy substance, optionally including the non-pre-gelatinized fraction of at least one partially pre-gelatinized non-waxy starch, the first fraction optionally containing at least one non-starchy substance in a proportion based on dry extract of less than or equal to 20 % by weight of the total quantity of substances making up the first fraction,
- a second fraction containing non-waxy pre-gelatinized starch and/or the pre-gelatinized fraction of said partially pre-gelatinized, non-waxy starch(es) in a quantity ranging between 1 % and 35 % by weight of said total quantity of substances in the first fraction,
- water accounting for between 20 % and 40 % by weight of the kneaded raw dough,
- between 2 % and 7 % of fats other than those optionally contained in said non-starchy substance(s) and accounting for between 2 % and 7 % of the weight of the kneaded raw dough,
- and optionally at least one additive such as salt and/or at least one chemical raising agent and/or soya lecithin and/or at least one flavouring and/or at least one colouring agent;
b) arranging said kneaded raw dough in layers and/or sheets to obtain a strip of raw dough;
c) cutting the strip of layered dough and/or sheets of dough into individual pieces of raw dough,
d) baking the individual pieces of raw dough in the oven at a heat high enough both to cause the dough to dehydrate and to cause the product to bubble or blister in order to reduce the humidity to a value ranging between 1.5 % and 3.5 % and produce an at least partially bubbled or blistered surface.

2. Method as claimed in claim 1, **characterised in that**, during step d, the temperature of the oven is at least 220EC and preferably in the range of between 220EC and 280EC, during bubbling or blistering of said individual pieces of dough.

3. Method as claimed in one of claims 1 or 2, **characterised in that** the baking time is in the range of between 1.5 and 5 minutes.

4. Method as claimed in one of claims 1 to 3, **characterised in that** a said non-starchy ingredient is selected from cheeses and/or vegetables.

5. Method as claimed in one of claims 1 to 4, **characterised in that** said substances constituting the first fraction are selected from dehydrated potatoes and at least one cereal, for example wheat flour.

6. Method as claimed in one of claims 1 to 4, **characterised in that** said substances constituting the first fraction are 85 % to 90 % of dehydrated potatoes and 10 % to 15 % of vegetables.

7. Method as claimed in one of claims 1 to 4, **characterised in that** said substances constituting the first fraction are 80 % to 90 % of dehydrated potatoes and 10 % to 20 % of cheese.

8. Method as claimed in one of claims 1 to 4, **characterised in that** said substances constituting the first fraction are 53 % to 63 % of cereals, 30 % to 40 % of dehydrated potatoes and 5 % to 9 % of cheese.

9. Method a claimed in one of claims 1 to 4, **characterised in that** said substances constituting the first fraction are 82 % to 92 % of dehydrated potatoes and 8 % to 18 % of maize flour and/or Masa Flour.

10. Method as claimed in one of claims 1 to 4, **characterised in that** said substances constituting the first fraction are 78 % to 88 % of dehydrated potatoes, 8 % to 18 % of maize flour and/or Masa Flour and 2 % to 6 % of cheese.

11. Method as claimed in one of claims 1 to 4, **characterised in that** said substances constituting the first fraction are 56 % to 66 % of wheat flour, 11 % to 21 % of dehydrated potatoes and 18 % to 28 % of rice and/or cereals other than wheat.

12. Method as claimed in one of claims 1 to 4, **characterised in that** said substances constituting the first fraction are 47 % to 57 % of maize flour, 31 % to 41 % of starch and 5 % to 17 % of cheese.

13. Method as claimed in one of the preceding claims, **characterised in that** step a) incorporates a sub-step a₁ during which the powdered ingredients are mixed dry to obtain a dry mixture in which said non-waxy pre-gelatinized starch is dispersed in the other ingredients.

14. Method as claimed in claim 13, **characterised in that** step a) incorporates a sub-step a₂ during which 40 % to 60 % of the total quantity of water is incorporated in said mixture to produce a moist mixture.

15. Method as claimed in claim 14, **characterised in that** step a) incorporates a sub-step a₃ during which the fat and optionally the other remaining ingredients are incorporated in said moist mixture and the rest of the water is incorporated at a temperature ranging between 50EC and 85EC to obtain said kneaded raw dough in readiness for forming layers and/or sheets.

16. Method as claimed in one of the preceding claims, **characterised in that** said kneaded raw dough has a peak force ranging between 3 daN and 12 daN and preferably between 6 daN and 9 daN according to the rheology test based on the KSC method.

17. Method as claimed in one of the preceding claims, **characterised in that** step b takes place within 90 minutes after the end of step a.

18. Method as claimed in one of the preceding claims, **characterised in that** it incorporates a step during which so-called degassing holes are made in the raw dough to obtain a product with a plurality of blisters or puffed-up bubbles after cooking.

19. Method as claimed in one of the preceding claims, **characterised in that**, after step b, the kneaded raw dough is between 0.2 mm and 0.7 mm thick and preferably between 0.35 mm and 0.55 mm thick.
